# EUROPEAN PATENT APPLICATION

(11) **EP 2 947 736 A2**
(43) Date of publication of application: **25.11.2015**
(21) Application number: 15168982.5
(22) Date of filing: 22.05.2015
(51) Int. Cl.: H02G 3/32

(54) **MODULAR CLAMPING ASSEMBLY FOR FIXING A CONDUIT TO A BODY OF A VEHICLE, AND RAIL VEHICLE CARRIAGE**

(30) Priority: 22.05.2014 IN CH25362014
(71) Applicant: Bombardier Transportation GmbH, 10785 Berlin (DE)
(72) Inventor: Soni, Praful, 387630 Kathlal, Kheda (IN); Ammedgad, Hasandongri, 587116 Bilagi, Bagalkot (IN)
(74) Representative: Zimmermann & Partner Patentanwälte mbB

(57) **Abstract**

A modular clamping assembly is described for fixing a conduit to a vehicle, particularly a body of a rail vehicle carriage. A holding member which includes a passage for holding a conduit forms at least one linear row, together with two spacers, which is disposed along frame portions of a frame. The frame portions are releasably fixed to the two spacers. At least one frame portion engages with the holding member by means of engaging faces of the frame portion and the holding member, respectively.

## Description

### Technical field

Disclosed herein is a modular clamping assembly, particularly for fixing a conduit to a body of a rail vehicle carriage, and to a vehicle, particularly to a body of a rail vehicle carriage.

### Background of the invention

Vehicle carriages such as train carriages can have conduits for carrying fluids and electricity, often placed underneath the carriage. The conduits are clamped to the carriage so as to reduce stress on joints or connections of the conduits as well as to avoid loose conduits from becoming damaged during movement of the carriage. Maintenance or replacement of the conduits, or of parts nearby the conduits, often involves disassembly of the clamp. Therefore, it is desirable to have a clamping assembly which allows for convenient removal of the conduit and/or assembly itself, and which also robustly fixes the conduit to the body of the rail vehicle.

JP 09107189 A describes a cable holding block. JP 2004304897 A describes a cable retainer. KR 101129558 B1 describes an optical cable holder capable of holding optical cable and an optical cable connecting device having the same.

### Disadvantages of the prior art

Vibrations and other harsh conditions can cause mechanical fatigue and ultimately failure of clamps, particularly clamps on vehicle carriages, and more particularly on clamps for holding conduits which may also transfer vibration and sometimes leak fluids which may damage components of a clamp. The above cited documents do not provide optimal stability. Also, the above cited documents do not provide enhanced ease of access for disassembly or removal of the conduits from a clamping assembly. It is challenging to design a clamp for a rail vehicle carriage which is both stable and easily dissembled and re-assembled.

### Problem solved

It is possible with the modular clamping assembly disclosed herein to provide for secure attachment of conduit(s) to a body of a rail vehicle, while providing for ease of access and assembly/disassembly. Furthermore, the modular clamping assembly described herein is amendable to multiple configurations for accommodation of different types of conduits such as those of different diameter. Yet furthermore the modular clamping assembly provides for easy adjustment for example to accommodate more or fewer or differently sized conduits. Yet furthermore, the modules, particularly the holding members, which make up the clamping assembly can be interchangeable, thus adaptive to different conduit types and variable overall clamp/conduit geometry. Yet furthermore, the modules which make up the clamping assembly can have reduced manufacturing costs.

### Inventive solution

To achieve the advantages mentioned above, a modular clamping assembly for fixing a conduit to a vehicle such as to a body of a rail vehicle carriage is provided. Additionally, a rail vehicle carriage is contemplated, which can comprise a body, at least one conduit, and the clamping assembly as described herein. The clamping assembly can be mounted to the body and hold the conduit. Further embodiments, modifications, and improvements will be apparent from the following description and the appended claims.

According to an embodiment, the modular clamping assembly can include a frame, which includes a first frame portion and a second frame portion, and at least one holding member which includes a passage for holding a conduit. The modular clamping assembly can further include at least two spacers. The two spacers and the at least one holding member can be disposed in at least one linear row along the frame portions. The frame portions are arranged on opposite sides of the linear row formed by the two spacers and the holding member and can be releasably fixed to the two spacers. At least one of the first frame portion and the second frame portion can engage with the holding member by means of a respective one of engaging faces of the first frame portion and the second frame portion and the holding member, respectively.

An advantage of the spacers and frame portion being releasably fixed is that it ensures convenient access to the conduits for assembly or disassembly. Furthermore, by fixing the frame to the spacers, less stress on the holding members is possible, which is particularly advantageous because the holding members may already experience stress due to some vibrations from the conduits. Also, the engaging faces can advantageously provide a secure attachment of the holding members to the frame.

It is further contemplated that the linear row of the two spacers and holding member can be disposed between the frame portions. With such geometry, the frame portions can clamp the row between them and secure the holding member and spacers. An advantage is that it is easy to assemble and disassemble the clamp, which may be necessary occasionally for maintenance purposes.

Furthermore, the spacers can be preassembled to the frame portions such that the one or more holding members can still be inserted between the frame portions. In this stage, the frame portions do not yet have to clamp the spacers but can allow sufficient play to insert the one or more holding members.

It is further contemplated that the engaging faces of the holding member and one of the frame portions can be adjacent. An advantage is that the frame portion can securely engage the holding member.

It is further contemplated that the spacers can be perpendicular to the frame portions. An advantage is that the perpendicular orientation of the spacers reduces the possibility of slipping of the spacers particularly while the clamp is assembled. Perpendicularly oriented spacers can also evenly share the compression load if the clamp is assembled by compressive force, so as to reduce the possibility of excessive fatigue on any one part.

It is further contemplated that the passage can be configured to allow the conduit to pass through, rather than for example terminate at the clamping assembly. Thus, the clamping assembly can be designed to support at least one conduit at a position between its ends, and is particularly advantageous for supporting a long conduit that may require support at at least one intermediate position along the length of the conduit, between the ends of the conduit.

According to an embodiment, the spacers and the holding member can be laterally in contact with each other, for example by interlocking complementary elements or simply by abutting against each other, or can be spaced from each other. The lateral position of the spacers and the holding member within the linear row, i.e. the position along the direction of the linear row, can thus be varied for adapting the clamping assembly.

It is further contemplated that the spacers can be located at least at each end of a row of holding members. An advantage is that the assembly is less susceptible to deformation leading to fatigue, particularly fatigue stemming from torsional deformation. Spacers located at the ends are especially resistant to torsional flexing.

It is further contemplated that the holding member(s) and spacers along the row can be of the same height in the direction perpendicular to the longitudinal extension of the frame portions. This provides the advantage of an even distribution of a compressive load, such as one directed between the first and second frame portions, through the holding member and spacers, which may be manifest if the clamping assembly is assembled with the spacers and holding member(s) between the frame portions. The one or more holding members and the at least two spacers, when arranged together in a linear row, can form together respective common engaging faces on opposite sides of the row facing the first and second frame portions.

According to an embodiment, the one or more holding member and the spacers can have same engaging faces to form respective continuous common engaging faces on opposite sides of the row facing the first and second frame portions. This can allow changing the relative arrangement and order of the spacers and holding members in the linear row and contributes to the modular character of the clamping assembly. The linear row can therefore include, in this order, a spacer, two or more holding members and a further spacer. An alternative is to add a third spacer between holding members to add a further fixation point at which the first and/or second frame portions are fixed to the spacers.

According to an embodiment, the one or more holding member and the spacers can have the same thickness but can have a different width in the extension of the linear row. Each spacer can have a width less than the width of a holding member. When arranging in a linear row, the outer faces of the spacers and the holding member can flush with each other to form continuous outer faces of the linear row including continuous engaging faces.

The continuous engaging faces allows, for example, to move the first and second frame portions relative to the linear row to bring, for example, fixation openings in the first and second frame portions in alignment with the spacers. In order to facilitate the modularity, the width of the spacers in the longitudinal direction of the row when assembled together with the holding members can be half of the width of a holding member. The fixation openings in the first and second frame portions can be arranged at a pitch corresponding to the width of the spacer elements. The spacer elements can also have the same width as the holding members.

It is further contemplated that the frame portions are linear and arranged opposite to each other. This can allow the frame portions to compressively hold the row of spacers and holding module(s).

It is further contemplated that the linear row of the spacers and holding module(s) is being between the frame portions. This can allow the frame portions to compressively hold the row of spacers and holding module(s). A compressive type hold can be advantageous because the compressive force can be distributed to the conduits as well as the holding member(s) and spacers, securing the conduit(s) within the passage of the holding member(s).

In an embodiment, each of two fixing members can extend through a respective spacer and engage with the first and second frame portions to clamp the spacer and the holding member between the first and second frame portions. More than two fixing members are also contemplated. The extension of the fixing members through the spacers can result in a more stable clamp. Vibrations from the carriage which are transmitted through the fixing members have a reduced effect on the holding member which is in contact with the conduit. Thus, the conduit can be shielded from vibrations which can be especially important for electrical conduits which can be clamped by the assembly.

In an embodiment, the holding member and/or the spacers can be formed by a polymer such as polyamide. Polymers such as polyamide can damp vibrations, which can reduce fatigue. Furthermore, polymers such as polyamide are inexpensive, reducing the manufacturing cost of the assembly.

In an embodiment, the holding member can include a first subunit and a second subunit connectable to the first subunit, and each of the subunits can have a recessed portion facing each other for forming the passage of the holding member. An advantage is that the holding member can easily be disassembled to release a conduit. For example, this can reduce maintenance time, particularly considering that some maintenance operations can require removal or replacement of a conduit.

It is contemplated that the first and second subunits can be interchangeable, e.g. identical or indistinguishable from each other, which can reduce manufacturing costs.

In an embodiment, the recessed portions of the subunits can be semicircular to form a circular passage of the holding member. It is advantageous for the shape of the passage to match the shape of the conduit, typically circular, so as to reduce stress on the conduit, improving its useable lifetime.

In an embodiment, at least one ridge and/or groove can be disposed in each recessed portion of the subunits to form a ridge and/or groove on an inner surface of the passage. An advantage is that, particularly in combination with a holding member formed by a polymer such as polyamide, the walls of the conduit are cushioned against vibrations transmitted through the holding member. This can increase the usable lifetime of the conduit. A ridge formed of a compliant material is also contemplated, which can further cushion the walls of the conduit. The ridge and/or groove can furthermore provide a better grip on the conduit so as to reduce the risk of slipping of the conduit in the direction of the passage. Slippage is undesirable, because it can lead to tension in the conduit, which may then result in stress on a conduit connection, particularly at an end of the conduit.

In an embodiment, each subunit can further include an alignment and/or fixing member for aligning and/or fixing the first subunit to the second subunit. This can ease the effort involved with assembly of the clamping assembly, saving maintenance time. Furthermore, by aiding in ensuring correct alignment of the subunits, a robust connection can be ensured.

An alignment and/or fixing member can be for example a tab and complementary groove. The tab can be on one of the subunits and the complementary groove on the other. For example, the tab and complementary groove can form an interference fit which can aid in facilitating a rapid disassembly and re-assembly during a maintenance operation.

In an embodiment, each of the first and second subunits can further include a respective contact face for contacting the respective one of the first and second frame portions. The contact face can be disposed on a side opposite to the recessed portion, and each contact face can form a respective one of the engaging faces. An advantage is that a robust connection is made between the frame and the holding member so as to reduce the long-term effects of vibrations that may otherwise lead to loosening of the clamp. Furthermore, the frame can be proximate each of the subunits, which can ensure a low profile. A clamping assembly with a low profile is less susceptible to fatigue than one extending a great distance from the frame. Also, a low profile, particularly for a clamping assembly for the underside of a carriage, is desirable for enhanced clearance over the ground. Alternatively or additionally an advantage is that when the profile of the clamping assembly is low, vibrations which may be transmitted from the carriage through the assembly can result in lower amplitude displacements at the end of the clamping assembly farthest from the carriage, particularly in comparison to an assembly with a higher profile. This can reduce fatigue.

In an embodiment, each of the contact faces can include a ridge and/or groove. A ridge and/or groove of the contact face can aid in securing the frame to the subunits of the holding member. This can reduce the chance of misalignment of the clamp during assembly, and can furthermore decrease the chance of slipping of the clamp due to the harsh conditions experienced by the clamp during normal operation of the carriage. It is contemplated that the ridge and/or groove can extend along the entire face of the subunit, which can enhance the ease of assembly while ensuring alignment of the subunit to the frame portion.

It is also contemplated that the ridge and/or groove can form an interference fit with the frame portion, which can ease maintenance operations in which the assembly is taken apart and at least partially re-assembled.

In an embodiment, each of the two spacers can include a first spacer element connectable to the first subunit and a second spacer element connectable to the second subunit. An advantage is that by increasing the connectivity of the components, for example the first spacer element and the first subunit, the stability of the overall assembly is increased. This reduces the effects of vibrations to cause fatigue and/or loosening of the parts. The modularity of the clamping assembly can also be increased, increasing the flexibility of use with different conduits and conduit geometries.

In an embodiment, the clamping assembly can further include connecting elements for connecting the first spacer element to the first subunit and the second spacer element to the second subunit, particularly for releasably connecting the spacer elements to the subunits. An advantage is that by increasing the connectivity of the components, for example the first spacer element and the first subunit, the stability of the overall assembly is increased. This can reduce the effects of vibrations to cause fatigue.

In an embodiment, the connecting element can include a pin and/or a glue. An advantage is that by increasing the connectivity of the components, the stability of the overall assembly is increased. This reduces the effects of vibrations to cause fatigue. Glue can aid in the strength of the clamping assembly.

In an embodiment, each of the first spacer element and the first subunit of the holding member can include interlocking complementary elements to connect the first subunit and the first spacer element with each other in a form-locking manner. Each of the second spacer element and the second subunit of the holding member can include interlocking complementary elements to connect the second spacer element and the second subunit of the holding member with each other in a form-locking manner. An advantage is that by increasing the connectivity of the components, the stability of the overall assembly is increased. This reduces the effects of vibrations to cause fatigue. Furthermore, the form-locking can be reversible, so as to provide for facile assembly/disassembly.

In an embodiment, the interlocking complementary elements can be dovetail joints. An advantage is that by increasing the connectivity of the components, the stability of the overall assembly is increased. This reduces the effects of vibrations to cause fatigue. Furthermore, dove-tail joints can be easily and/or reversibly connected/disconnected, so as to provide for facile disassembly and/or reassembly, and are easy to manufacture, thus providing a low manufacturing cost.

In an embodiment, the clamping assembly can further include at least one further holding member comprising a passage for holding a further conduit. The at least two spacers can be arranged together with the holding member and the further holding member in one linear row. An advantage is that the profile of the clamping assembly is low, such that vibrations which may be transmitted from the carriage through the assembly can result in lower amplitude displacements at the end of the clamping assembly farthest from the carriage, particularly in comparison to an assembly with a higher profile. This can reduce fatigue. An arrangement in rows can maintain order in the arrangement of the conduits held within the passages. This can ease maintenance operations. Additionally, if the clamping assembly has exactly one row, the assembly/disassembly can be quite facile, since all conduits are nearly equally accessible. Yet additionally, the low profile may be beneficial in ensuring adequate clearance such as ground clearance beneath the carriage, particularly if the clamping assembly is fixed to the underside of a carriage.

In an embodiment, the passage of a further holding member can have an inner diameter which is different to an inner diameter of the passage of the holding member. This can allow the clamping assembly to clamp conduits of different diameters effectively. For example conduits of hydraulic fluid may have a different diameter than those of water or electricity.

In an embodiment, the spacers and the holding member have the same height in a direction between the first frame portion and the second frame portion and form together on each side one of the engaging faces facing a respective one of the first and second frame portions. The thus formed respective common engaging faces cooperate with the respective first and second frame portions.

According to an embodiment, each of the spacers and the holding member is mirror-symmetrical along a plane running between and parallel to the first and second frame portions. These parts can therefore be assembled regardless their orientation, i.e. whether they are up or down or rotated by 180°. This greatly facilitates assembling.

According to an embodiment, the modular clamping assembly further includes two linear rows, each formed by at least two spacers and one or more holding members, wherein at least one intermediate frame portion is arranged between the two rows, and wherein each of the fixing members extends through a respective one of the spacers of the two linear rows and the intermediate frame portion and engages with the first and second frame portions to clamp the two linear rows and the intermediate frame portion between the first and second frame portions.

The clamping assembling can include more than one row, for example two or three linear rows. The intermediate frame portion or portions keep the adjacent linear rows together and prevent that individual parts fall off the assembly. For example, the intermediate frame portion or portions can engage with the respective engaging faces of the adjacent linear rows between which the intermediate frame portion is disposed.

According to an embodiment, a modular clamping assembly for fixing a conduit to a body of a rail vehicle carriage includes at least one holding member which includes a first and a second subunit. Each of the subunits has a recessed portion facing each other to form a passage for holding the conduit. The modular clamping assembly further includes at least one spacer and a frame, wherein the frame includes a first and a second frame portion. At least one fixing member extends through the spacer and engages with the first and second frame portions to clamp the spacer and the holding member between the first and second frame portions.

According to an embodiment, a modular clamping assembly for fixing a conduit includes a holding member which includes a first and a second subunit. Each of the subunits has a recessed portion facing each other for forming a passage for holding the conduit. The modular clamping assembly further includes at least one spacer and a connecting element for connecting the holding member and the spacer.

The connecting element can include interlocking complementary elements on the holding member and the spacer, wherein the interlocking complementary elements optionally forms a dovetail joint.

### Figures

The appended drawings show embodiments and serve, together with the description, for explaining the principles of the invention. The elements of the drawing are relative to one another and not necessarily true to scale. The same reference numerals are used to denote correspondingly similar parts.
Figure 1 shows a clamping assembly, according to an embodiment described herein.
Figure 2 shows a row of subunits of holding members and two spacers engaged with a frame portion, according to an embodiment described herein.
Figure 3 shows a holding member, according to an embodiment described herein.
Figure 4 shows a subunit of a holding member, according to an embodiment described herein.
Figure 5 shows a spacer, according to an embodiment described herein.
Figure 6 shows a subunit of a holding member and two spacer elements, according to an embodiment described herein.
Figure 7 shows a subunit of a holding member and two spacer elements, according to an embodiment described herein.
Figure 8 shows a subunit of a holding member and two spacer elements, according to an embodiment described herein.
Figure 9 shows a subunit of a holding member and two spacer elements, according to an embodiment described herein.
Figure 10 shows a subunit of a holding member and two spacer elements, according to an embodiment described herein.
Figure 11 shows a clamping assembly, according to an embodiment described herein.

### Exemplary embodiments

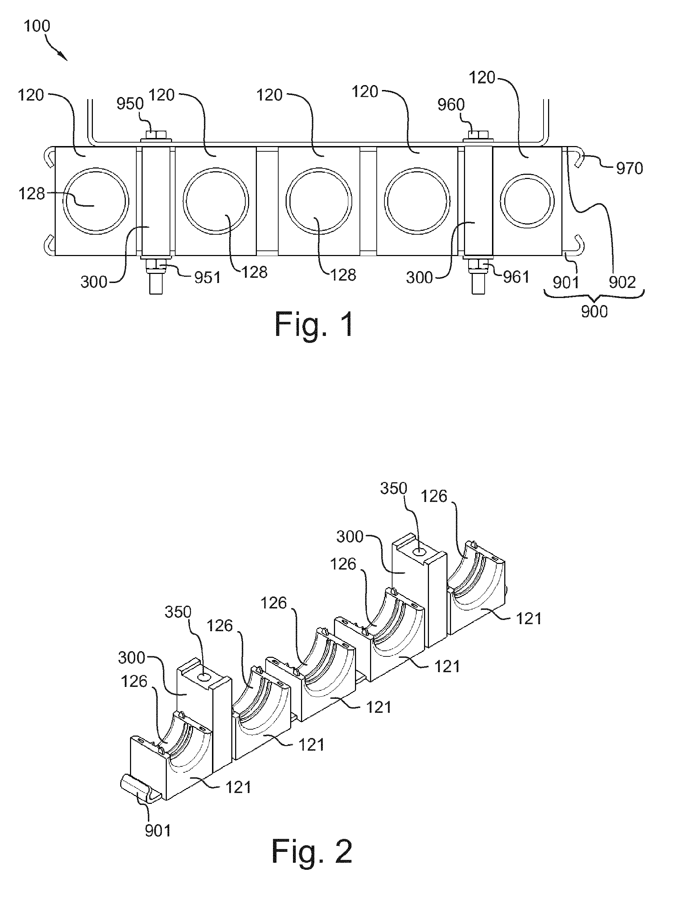

Figure 1 illustrates a modular clamping assembly 100 for fixing a conduit to a body of a rail vehicle carriage. The clamping assembly 100 can be mounted to the body of a rail vehicle for example, such as via the frame 900, or more particularly a frame portion 902. Figure 1 shows two frame portions, a first frame portion 901 and a second frame portion 902. Along the frame portions 901 and 902, and in a linear row, is disposed two spacers 300 and the holding member(s) 120. The row can be between the frame portions 901, 902, and the frame portions 901, 902 can be configured to hold the row between them by compressive force. There may be one or more holding members 120 which each include a passage 128 for holding a conduit such as a hose, electrical conduit, or the like. The row can be oriented along and optionally between the frame portions 901 902. There may be two or more spacers which can accommodate fixing members 950 which can extend, respectively, through the spacers 300. The spacers can engage the first and second frame portions 901, 902 to clamp the spacer 300 as well as the holding member(s) 120 between the first and second frame portions 901, 902. One or both of the frame portions 901 902 can engage with each holding member(s) 120 by means of engaging faces, which can be adjacent faces, respectively, of one (or both) of the frame members and the holding member. For example, a holding member 120 has two engaging faces, one which engages with the first frame portion 901 and the other engaging with the second frame portion 902.

The fixing members 950 can be a bolt and optional nut 950. As illustrated in Figure 1, there are two fixing members 950 and 960, each having a respective nut 951, 961. Alternatively, the bolts 950, 960 can extend through the spacers 300 and screw into the body, support beam, or the like of a carriage. It is contemplated that the clamping assembly can be attached to the underside of the vehicle. The fixing members can engage with the first and second frame portions 901, 902 to clamp the spacers 300 and the holding member(s) 120 between the first and second frame portions 901, 902.

The frame portions 901, 902 can include a stopper 970 or more than one stopper, particularly at the end(s) of the frame portions, which can be integral parts of the frame portions 901, 902. In Fig. 1, stoppers, like the stopper 970 indicated can have the form of a bend or curl in the frame portion, at the end of the frame portion. A bend or curl is advantageous in that it is simple to make, and does not require fitting a separate part. The stopper can aid in the positioning of the holding member(s) and spacers, defining an end point along the length of the frame portion beyond which the holding member(s) and stoppers cannot slide.

The frame portions can be strips, such as metal bars, having a long axis configured to lie along the row of spacers and holding member(s). The frame portions can nest within a contacting face, or engaging face, of the holding member(s) and/or spacers. The frame portions can have holes for insertion of fixing members 950, 960 such as bolts. The holes of the frame portions can be threaded for fixing the bolds, or nuts can be used.

The modular clamping assembly 100 can be attached to a vehicle such as a vehicle body, particularly of a carriage, via the fixing members 950, 960. A frame member of the vehicle body can serve as a place to mount the modular clamping assembly 100.

It is further contemplated that the frame portions 901, 902 can be identical to each other which can save manufacturing costs and simplify assembly. Alternatively, frame portions 901, 902, particularly bar-shaped ones, can have different widths so that between the frame portion 902 and holding member(s) and spacers, there is a tight interference fit; and along the first frame portion 901, it is possible for the holding member(s) 120 and spacers 300 to slide against the frame portion 901. For example, at the top engaging face of a holding member 120 which is adjacent the second frame portion 902, there can be an interference fit; while the fit between the first frame portion 901 and the lower engaging face of the holding member 120, there is a relatively looser fit, allowing sliding of the first frame portion 901 against the holding member 120 until the fixing members 950, 960 are tightened. This can aid in aligning the optional holes in the first frame portion 901 with bolts 950, 960 during assembly.

The row of spacers 300 and holding member(s) 120 can include spaces between the elements, which may aid in reducing the possibility of conduits rubbing against each other during normal operation of the vehicle. It may further aid in damping vibrations. The adjustability of placement of the holding member(s) 120 along the row, with variable spacing between nearby holding members 120, is advantageous because there may be variable spatial constraints where the clamping assembly is mounted. The modular clamping assembly 100, in at least some embodiments, is advantageous in having a few interchangeable parts yet the clamping assembly 100 is able to clamp conduits under a variety of circumstances which may include other spatial constraints.

Holding member(s) 120 can also be configured in the clamping assembly 100 to form a second row parallel to the first row, and also between the frame portions 901, 902.

Figure 2 shows a row of two spacers 300 and subunits 121 which are parts of holding members 120. The row can be along a frame portion, for example the first frame portion 901. The subunits 121 of the holding members 120 can be attached to the frame portion 901 by an interference fit, which can facilitate easy assembly, particularly re-assembly. The holes 350 of the spacers 300 are visible in Figure 2. The holes can accommodate fixing members such as bolts 950, 960, and can be arranged one per spacer 300. Each of the subunits 121 can have a recessed portion 126 for example in the shape of a semicircle, which can form the passage 128 for the conduit when the clamping assembly 100 is more completely assembled. The hole 350 of a spacer 300 can extend lengthwise through the spacer 300, and be configured to be perpendicular to the row formed by spacers 300 and holding member(s).

Figure 2 shows how one of the frame portions 901 can be configured to complement an engaging face of the subunit(s) 121 of the holding member(s) 120. The frame portion 901 can extend along a respective engaging face present on each module, that is, on the subunits 121 and spacers 300 in this case. Each of the modules can be symmetric such that a 180 degree rotation of the module with respect to the frame portion 901 results in an identical arrangement as shown, and an identical complementary fit between the module and the frame portion 901. Such symmetry can simplify assembly. It is also noted that the entire subassembly shown in Figure 2 has 180 degree rotational symmetry, which also can aid in simplifying assembly, for example to a complementary subassembly already attached to the body of the vehicle.

The tightness of the fit between the frame portion 901 and the engaging face of the subunit(s) 121 as well as the spacers 300 can be predetermined. For example, in the subassembly shown in Figure 2, an interference fit between the first frame portion 901 and the modules may be looser than the interference fit between a complementary second frame portion 902 and its modules. This is particularly advantageous when the complementary subassembly including the second frame portion 902 and its attached modules is mounted upside down underneath a body of a vehicle. Between each module (subunit 121 and/or spacer 300) there is a gap which can be adjustable, which contributes to the adaptable geometry of clamping assembly, making the clamping assembly particularly well suited for producing variable configurations.

The spacers 300 can have a length that is twice the length of the subunits 121, for example in order to simplify assembly.

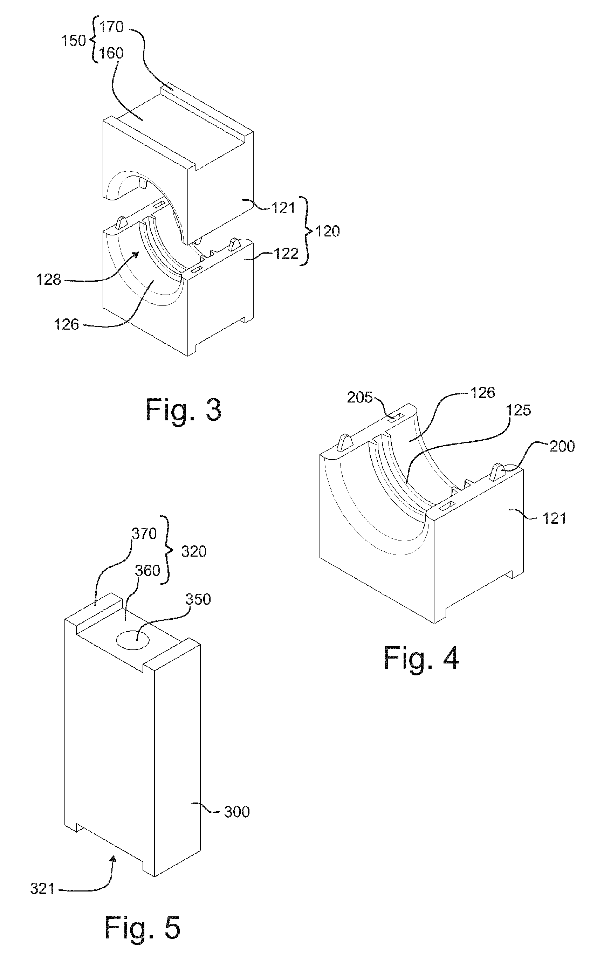

Figure 3 shows a holding member 120 comprising two subunits 121, 122. The subunits 121, 122 can be identical, which can save manufacturing costs. The engaging face, or contact face 150, of each subunit can be located on the opposite side of the recessed portion 126 of the subunit 121, 122. The contact face 150 of the subunit 121, 122, can be shaped to complement one of the frame portions 901, 902. For example, the contact face 150 engages with one of the frame portions 901, 902, such as to form an interference fit. For example, the engaging face 150 has a groove 160 and/or ridge 170. As depicted in Figure 3, a groove 160 resides between two ridges 170. One of the frame portions 901, 902 can reside within the groove 160, and optionally be attached by an interference fit, such as a reversible interference fit. As illustrated in Figure 3, the subunits 121, 122 can be arranged so that two oppositely disposed contact faces 150 are formed. At least one or each of the oppositely disposed contact faces 150 can engage with at least one or each of the frame portions 901, 902. As seen in Figure 3, two subunits 121, 122 can be arranged so that the respective recessed portions 126 of the subunits 121, 122 form the passage 128 for the conduit. As depicted in Figure 3, two subunits 121, 122 can engage to form a holding member 120.

Optionally, the engaging face 150 is configured to allow horizontal sliding of the holding member 120 along the corresponding frame portion 901 or 902 with which the engaging face 150 engages. This can aid in the flexibility of placement of the holding member 120, while maintaining ease of assembly.

The subunits 121, 122 can have 180 degree rotational symmetry so as to facilitate quick and easy assembly, since there is greater freedom in finding a correct orientation of a subunit 121 which fits a complementary subunit 122. A symmetric subunit also reduces the risk of misassembly.

A subunit 121 can have an engaging face 150 for engaging with a frame portion. The opposite face of the engaging face 150 of the subunit 121 can be a face which includes a recessed portion 126 for forming a passage 128 for holding a conduit. A groove 160 on the engaging face 150, configured for engaging with a bar shaped frame portion 901 or 902 can be configured to extend perpendicularly to the passage 128.

Figure 4 shows a subunit 121 of a holding member 120. Alignment and/or fixing of two subunits can be aided by alignment and/or fixing members 200, 205. As illustrated in Figs. 4 (and 3), the alignment/fixing members can be complementary shapes, placed on adjacent subunits 121, 122. The alignment/fixing members 200, 205 can be a tab 200 which complements a groove 205. The subunits may interlock, particularly reversibly interlock, such as through an interference fit between the complementary shapes. The alignment/fixing members 200, 205 can be located on ridges disposed on the same face of the subunit as is the recessed portion 126. The alignment/fixing members 200, 205 can be on opposite sides of the recessed portion 126 of the subunit 121, which can enable the contact of the alignment/fixing members 200, 205 with the complementary alignment/fixing members 200, 205 of a second subunit 122. The tab 200 and groove 205 indicated on the subunit 121 of Figure 4 can engage with a complementary subunit 122 having a complementary groove and tab (see Figure 3).

The subunit 121, for example each of the subunits 121, 122 forming a holding member 120 can have a ridge 125 for example for gripping a conduit disposed between two engaged subunits 121, 121. The ridge 125 can be along the recessed portion 126 of the subunit 121. The ridge can be formed such that when two complementary subunits 121, 122 are engaged to form a holding member120, the ridges 125 of the two subunits 121, 122 are configured to form a ring for contacting a conduit disposed in the passage 128 formed by the recesses 126 of the subunits 121, 122.

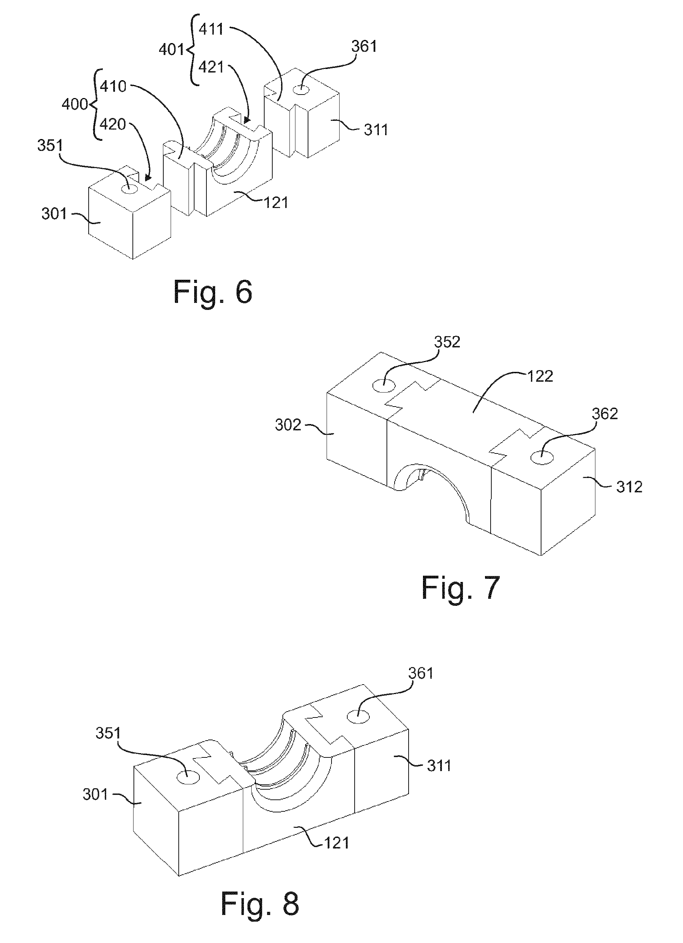

Figure 5 shows a spacer 300, which can have a hole 350 for accommodating a fixing member 950 such as a bolt. The spacer 350 can also include a groove 360 and/or ridge 370. The groove and/or ridge can be configured for engaging a frame portion 901 or 902. As illustrated, the spacer 300 can have groove 360 between two ridges 370, as similarly or identically the case for the subunit 121. The groove 360 and/or ridge 370 can aid in securing the engagement of an end of the spacer with one of the frame portions 901, 902, as can also be the case for the holding member(s) 120 and the frame portion. As illustrated, each end of the spacer 300 can engage, respectively, with each first and second frame portion 901, 902. It is noted that the spacer 350 is not necessarily monolithic and can be formed of two spacer elements for example. Multiple spacer elements which can be stacked linearly so as to span from the first frame portion 901 to the second frame portion 902 are contemplated. For example, spacer elements 301, 302 (see Figs. 6 and 7) may be connectable to subunits 121, 122. This can aid in cross-connecting and adding to the modularity of the clamping assembly.

An engaging face 320 of the spacer 300 can be identical in profile to an engaging face 150 of the holding member. This allows the holding member(s) 120 and spacers 300 to all make identical connections with the respective frame portions 901, 902. The engaging face 320 of the spacer 300 can include a groove 360 and ridge(s) 370. The spacer 300 can have two engaging faces 320, 321, oppositely disposed, for engaging with the first and second frame portions 901, 902.

The spacer 300 can have 180 degree rotational symmetry about the axis of the hole 350 to provide for ease of assembly. Alternatively or additionally, the spacer can have mirror symmetry with respect to the plane midway between the engaging faces 320, 321, which can also provide for ease of assembly. Alternatively or additionally, the spacer can have mirror symmetry with respect to the plane midway, between, and parallel to ridges 370 disposed on either side of grooves 370 at the engaging faces 320, 321, the mirror plane extending along the hole 350. Greater symmetry of components parts is advantageous in that it leads to a lower risk of misassembling the clamp.

Figure 6 shows a subunit 121 of a holding member 120 and spacer elements 301, 311. Figure 7 also shows a subunit 122 and spacer elements 302 and 312. The spacer elements 301 and 311 shown in Figure 6 can form two spacers 300, by combining, respectively, with spacer elements 302 and 312 shown in Figure 7. The subunit 121 and spacer elements 301, 311 can be attached, such as reversibly. Also, the subunit 122 and spacer elements 301 and 312 can be attached, such as reversibly. The subunits 121 (122) can lie between the respective spacer elements 301, 311 (302, 312). The subunits 121 (122) and respective spacer elements 301, 311 (302, 312) can form a linear row. The row can lie along a frame portion 901 (902).

As illustrated in Figure 6, a connecting element 400, which can be a dovetail, can join, such as reversibly join, a subunit 121 to a spacer element 301. There can be more than one connecting element such as a second connecting element 401 so that a subunit can be joined with multiple spacer elements 301, 311; for example a subunit 121 can lie between spacer elements 301, 311, to which the subunit 121 is joinable. The connecting element(s) 400 (401) can include a tail 410 (411) and socket 420 (521). Thus, the subunit 121 can include a tail 410 and a socket 421, which can connect respectively to a first spacer element 301 and a second spacer element 311, such as through respective slots 420 and 421 on the respective spacer elements 301, 311.

Alternatively the complementary elements 400, 401 can be such that two tails are located on the subunit 121, and the sockets are located on the spacer elements 301, 311. Alternatively, the complementary elements 400, 401 can be such that two sockets are located on the subunit 121, and the tails are located on the spacer elements 301, 311. The complementary elements 400, 401 can be particularly suitable for forming a robust connection, yet being separable; thus dovetail joints are contemplated.

The spacer elements 301, 311, 302, 312 can include respective holes 351, 361, 352, 362 for forming the hole 350 of the spacer 300. A bolt can be inserted into the hole for fixing the clamping assembly to the body of a carriage or the like. Figures 7 and 8 show subunits 122; 121, respectively, assembled with their respective spacer elements 302, 312; 301, 311. The subassemblies shown in Figures 7 and 8 can be further assembled and placed within a frame 900 for securing a conduit.

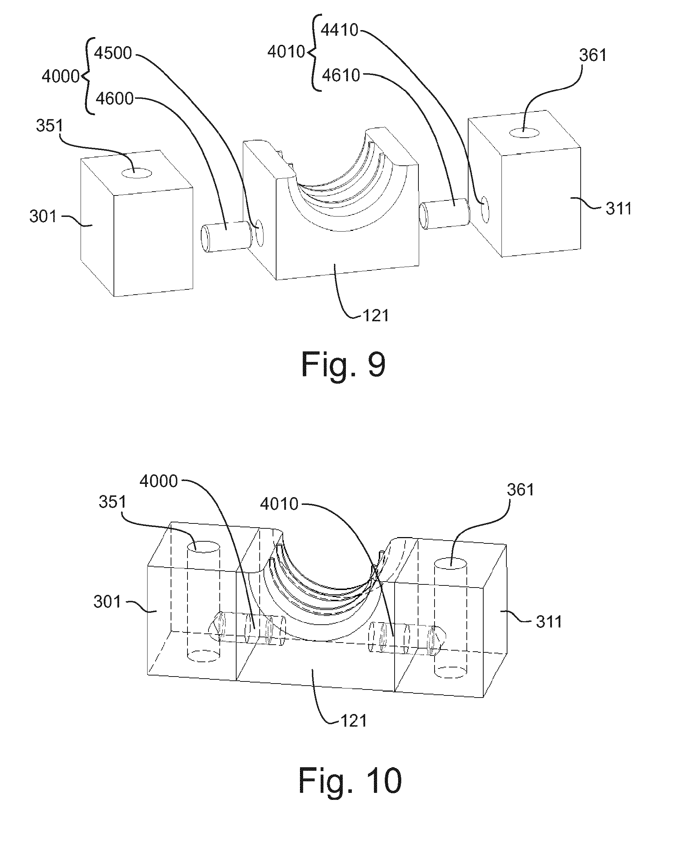

Figure 9 shows a subunit 121 of a holding member 120 and two spacer elements 301, 311. It is further contemplated that a connecting element 4000 for joining a subunit to a spacer element 301 can include a pin 4600 and a hole 4500. The pin 4600 can project from the spacer or can be a discrete piece, as shown in Figure 9. The pin 4600 can connect the hole 4500 of the subunit 121 with a hole (not shown) of the spacer element 301. A hole 4610 of a spacer element 311 is shown, which illustrates that a second connecting element 4010 which connects the subunit 121 to a second spacer element 311 via a pin 4610 can be provided as well. The subunit 121 can have connecting elements 4000, 4010, on opposite faces, configured to join with spacer elements 301, 311.

Figure 10 shows a connected spacer element 301, subunit 121 of a holding member 120, and second spacer element 311, joined with first and second connecting elements 4000, 4010, which include pins 4600, 4610. Holes 351, 361 can accommodate a fixing member such as a bolt for fixing to the frame 900.

As shown in the examples of Figures 6 through 10, each subunit 121 and its complementary subunit 122 can attach to spacer elements 301, 311, 302, 312 for a total of four spacer elements. An embodiment is also contemplated in which the subunits 121 and 122 attach to two spacers 300 which each include a complementary face for engaging with the respective engaging face of the subunits 121, 122. In other words, each of two spacers 300, each as a monolithic unit, can include a tail or slot which is complementary to a slot or tail of each of the complementary pair of subunits 121, 122.

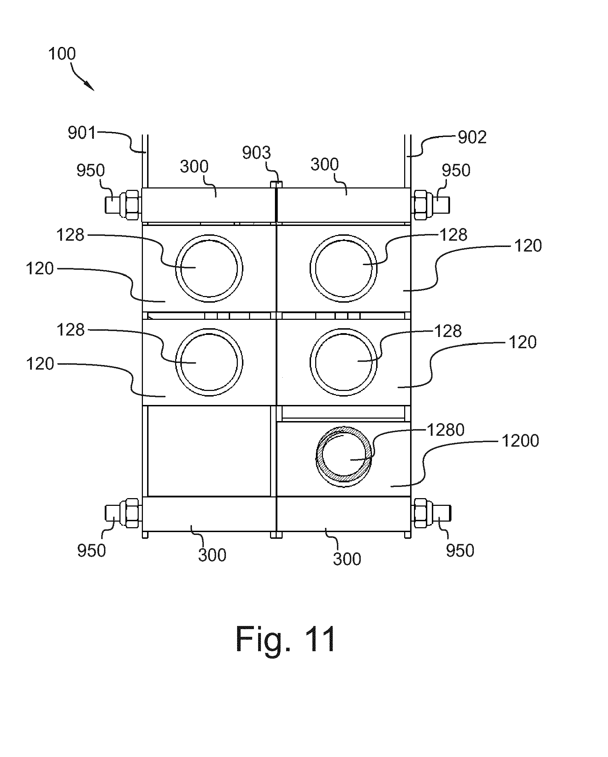

Figure 11 shows a clamping assembly 100, according to an embodiment. The first and second frame portions 901, 902 can clamp the holding members 120 between them. Spacers 300 and holding members 120, 1200 are arranged so as to form multiple rows, in particular two rows, between the frame portions. The rows can be oriented along and between the frame portions 901, 902. Optionally, an intermediate frame portion 903 can be included in the clamping assembly 100, for example between the first and second rows of spacers and holding member(s). An intermediate frame portion 903 can contribute to the stability of the clamp.

The passages 128, 1280 of the holding members 120, 1280 can have varying sizes, for example to accommodate conduits of different sizes. The sizes of the passages 128, 1280, are configured to be complementary to the sizes of the conduits to be held within the holding members 128, 1280.

The spacers 300 can be arranged at the ends of the rows. The clamping assembly 100 can oriented so that the row(s) of spacers 300 and holding member(s) are oriented horizontally (as in Figure 1) or vertically (as in Figure 11). Such flexibility of orientation of the clamping assembly is, in addition to the modularity of the holding members and other components, contributes to the clamping assembly being versatile for various vehicular applications.

Hereinabove, a conduit can be a cable, hose, or the like, such as a hydraulic hose, water hose, or electrical cable. Hereinabove, the clamping assembly can be used for underframe conduit support.

While there have been illustrated and described herein specific embodiments, it is within the scope of the present invention to suitably modify the embodiments shown without departing from the scope of the present invention.

### List of reference signs

- modular clamping assembly: 100
- at least one holding member: 120
- first subunit: 121
- second subunit: 122
- ridge: 125
- recessed portion: 126
- passage: 128
- contact face: 150
- groove: 160
- ridge: 170
- alignment/fixing member (tab): 200
- alignment/fixing member (groove): 205
- spacers: 300
- first spacer element: 301
- second spacer element: 302
- spacer element: 311
- spacer element: 311
- spacer element: 312
- spacer engaging face: 320
- spacer engaging face: 321
- hole: 350
- hole: 351
- hole: 352
- groove of spacer: 360
- hole: 361
- hole: 362
- ridge of spacer: 370
- connecting element (dovetail): 400
- connecting element (dovetail): 401
- interlocking complementary element (tail): 410
- interlocking complementary element (tail): 411
- interlocking complementary element (socket): 420
- interlocking complementary element (socket): 421
- hole (blind hole): 450
- pin: 460
- frame: 900
- first frame portion: 901
- second frame portion: 902
- intermediate frame portion: 903
- fixing member (bolt): 950
- fixing member (nut): 951
- fixing member (bolt): 960
- fixing member (nut): 961
- stopper: 970
- further holding member: 1200
- passage: 1280
- connecting element: 4000
- connecting element: 4010
- hole: 4410
- hole: 4500
- pin: 4600
- pin: 4610

## Claims

1. A modular clamping assembly (100) for fixing a conduit to a body of a vehicle, particularly a rail vehicle carriage, the modular clamping assembly (100) comprising:
- a frame (900) comprising a first frame portion (901) and a second frame portion (902); and
- at least one holding member (120) comprising a passage (128) for holding a
conduit;
**characterized in that** the modular clamping assembly further comprises at least two spacers (300), wherein
- the two spacers (300) and the at least one holding member (120) are disposed in at least one linear row along the frame portions (901, 902),
- the frame portions (901, 902) are arranged on opposite sides of the linear row formed by the two spacers (300) and the holding member (120), and are releasably fixed to the two spacers (300), and
- at least one of the first frame portion (901) and the second frame portion (902) engages with the holding member (120) by means of a respective one of engaging faces of the first frame portion (901) and the second frame portion (902) and the holding member (120), respectively.

2. The modular clamping assembly (100) of claim 1, further comprising at least two fixing members (950), each of the two fixing members (950) extending through a respective one of the spacers (300) and engaging with the first and second frame portions (901, 902) to clamp the spacer (300) and the holding member (120) between the first and second frame portions (901, 902).

3. The modular clamping assembly (100) of claim 1 or 2, wherein the holding member (120) and/or the spacers (300) is formed by a polymer such as polyamide.

4. The modular clamping assembly (100) of any one of the claims 1 to 3, wherein
- the holding member (120) comprises a first subunit (121) and a second subunit (122) connectable to the first subunit (121),
- each of the subunits (121, 122) having a recessed portion (126) facing each other for forming the passage (128) of the holding member (120),
- wherein the recessed portions (126) can optionally be, for example, semicircular to form an optionally circular passage (128) of the holding member (120).

5. The modular clamping assembly (100) of claim 4, wherein at least one ridge and/or groove (125) is disposed in each recessed portion (126) of the subunits (121, 122) to form a ridge and/or groove (125) on an inner surface of the passage (128).

6. The modular clamping assembly (100) of any of the claims 4 to 5, wherein each subunit (121, 122) further comprises an alignment and/or fixing member (200) for aligning and/or fixing the first subunit (121) to the second subunit (122).

7. The modular clamping assembly (100) of any of the claims 4 to 6, wherein
- each of the first and second subunits (121, 122) further comprises a respective contact face (150) for contacting the respective one of the first and second frame portions (901, 902),
- the contact face (150) disposed on a side opposite to the recessed portion (126),
wherein
- each contact face (150) forms a respective one of the engaging faces,
- wherein each of the contact faces (150) can optionally comprise, for example, a ridge (170) and/or groove (160).

8. The modular clamping assembly (100) of any of the claims 4 to 7, wherein
- each of the two spacers (300) comprises a first spacer element (301) connectable to the first subunit (121) and
- a second spacer element (302) connectable to the second subunit (122).

9. The modular clamping assembly (100) of claim 8, further comprising connecting elements (400) for connecting the first spacer element (301) to the first subunit (121) and the second spacer element (302) to the second subunit (122), particularly for releasably connecting the spacer elements (301, 302) to the subunits (121, 122), wherein the connecting element (400) can optionally comprise, for example, a pin (460) and/or a glue.

10. The modular clamping assembly (100) of claim 8 or 9, wherein
- each of the first spacer element (301) and the first subunit (121) of the holding member (120) comprises interlocking complementary elements (410, 420) to connect the first subunit (121) and the first spacer element (301) with each other in a form-locking manner, and
- each of the second spacer (302) element and the second subunit (122) of the holding member (120) comprises interlocking complementary elements (410, 420) to connect the second spacer (302) element and the second subunit (122) of the holding member (120) with each other in a form-locking manner,
- wherein the interlocking complementary elements (410, 420) can optionally be, for example, dovetail joints.

11. The modular clamping assembly (100) of any preceding claim, further comprising at least one further holding member (1200) comprising a passage (1280) for holding a further conduit, wherein the at least two spacers (300) are arranged together with the holding member (120) and the further holding member (120) in one linear row, wherein the passage (1280) of the further holding member (1200) can have an inner diameter which can optionally be different than an inner diameter of the passage (128) of the holding member (128).

12. The modular clamping assembly (100) of any preceding claim, wherein the spacers (300) and the holding member (120) have the same height in a direction between the first frame portion (901) and the second frame portion (902) and form together on each side facing a respective one of the first frame portion (901) and the second frame portion (902) one of the engaging faces.

13. The modular clamping assembly (100) of any preceding claim, wherein each of the spacers (300) and the holding member (120) is mirror-symmetrical along a plane running between and parallel to the first and second frame portions (901, 902).

14. The modular clamping assembly (100) of any preceding claim, further comprising two linear rows, each formed by at least two spacers (300) and one or more holding members (120), wherein at least one intermediate frame portion (903) is arranged between the two rows, and wherein each of the fixing members (950) extends through a respective one of the spacers (300) of the two linear rows and the intermediate frame portion (903) and engages with the first and second frame portions (901, 902) to clamp the two linear rows and the intermediate frame portion (903) between the first and second frame portions (901, 902).

15. A rail vehicle carriage comprising:
- a body,
- the modular clamping assembly (100) according to any preceding claim, and
- at least one conduit, wherein the modular clamping assembly (100) is mounted to the body and holds the conduit.
